Europäisches Patentamt

European Patent Office

Office européen des brevets

(19)

(11) Numéro de publication: **0 086 441**
**B1**

(12) **FASCICULE DE BREVET EUROPEEN**

(45) Date de publication du fascicule du brevet:
16.10.85

(51) Int. Cl.⁴: **H 04 L 25/49**

(21) Numéro de dépôt: 83101178.8

(22) Date de dépôt: **08.02.83**

(54) **Dispositif de codage quadriphase pour transmission synchrone de données.**

(30) Priorité: **11.02.82 FR 8202227**

(43) Date de publication de la demande:
**24.08.83 Bulletin 83/34**

(45) Mention de la délivrance du brevet:
**16.10.85 Bulletin 85/42**

(84) Etats contractants désignés:
**BE DE FR GB IT LU NL**

(56) Documents cités:
**IEEE TRANSACTIONS OF MAGNETICS, vol. MAG-15,
no. 6, novembre 1979, pages 1465-1467, New York, US
J.A. BIXBY et al.: "Q.P., An improved code for high
density digital recording"**

(73) Titulaire: **COMPAGNIE INDUSTRIELLE DES
TELECOMMUNICATIONS CIT-ALCATEL S.A. dite:,
12, rue de la Baume, F-75008 Paris (FR)**

(72) Inventeur: **Levy, Michel, 63 Domaine de Montvoisin
Gometz-la-Ville, F-91400 Orsay (FR)**
Inventeur: **Surie, Serge, 60 rue Bronzac, F-94240 l'Hay
les Roses (FR)**

(74) Mandataire: **Weinmiller, Jürgen et al, Zeppelinstrasse 63,
D-8000 München 80 (DE)**

ACTORUM AG

## Description

La présente invention est relative à la transmission synchrone de données en vue, notamment, du raccordement numérique d'un central de commutation téléphonique à des installations d'abonnés en utilisant les lignes existantes. Elle concerne plus particulièrement les systèmes de transmission synchrone de données ayant un signal de transmission qui, en bande de base, est un signal à deux niveaux, obtenu par un codage dit «quadriphase» décrit par exemple dans l'article de U. Appel et K. Tröndle intitulé «Zusammenstellung und Gruppierung verschiedener Codes für die Übertragung digitaler Signale» et paru dans la revue allemande NTZ Heft 1, 1970, pages 11 à 16, figure 7 et dans l'article «Q.P., an improved code for high density digital recording» de J.A. Bixby et R.A. Ketcham paru dans la revue IEEE Transactions on magnetics, vol. mag-15, N° 6 novembre 1979, pages 1465-1467.

Dans les systèmes de transmission synchrone de données, les informations binaires sont transmises successivement, une à une ou par groupes au cours d'intervalles de temps élémentaires successifs de même durée dits intervalles Baud. Pendant leur transmission, les informations ou les groupes d'informations sont codés et éventuellement modulés de manière à se présenter sous la forme d'un signal en ligne qui soit adapté aux possibilités fréquentielles de la voie de transmission et qui permette de récupérer le synchronisme. Le codage engendre un signal de transmission en bande de base et la modulation le transpose en bande passante si nécessaire. Le signal de transmission en bande de base est composé d'une succession de signaux élémentaires de même durée qui occupent généralement chacun un intervalle Baud, mais qui peuvent éventuellement déborder de leurs intervalles Baud respectifs pour se superposer partiellement et dont la forme dépend de la valeur de l'information ou du groupe d'informations transmis au cours de l'intervalle Baud considéré.

Le code quadriphase permet de transmettre les informations binaires par groupes successifs de deux au cours d'intervalles de temps égaux et successifs dits intervalles Baud. A chaque groupe successif de deux informations binaires il fait correspondre un élément de signal de transmission occupant un intervalle Baud distinct et prenant une parmi quatre formes distinctes correspondant à celles d'un signal d'horloge rectangulaire à la fréquence Baud déphasé de 0, $\pi/2$, $\pi$, $3\pi/2$ par rapport à la période Baud.

Les quatre formes possibles pour un élément de signal correspondent à celles des fonctions:

$$\pm \text{ signe } \left(\sin\left(\frac{2\pi}{T}t\right)\right) \cdot d\,(t-Tk)$$

$$\pm \text{ signe } \left(\cos\left(\frac{2\pi}{T}t\right)\right) \cdot d\,(t-Tk)$$

$d\,(t-kT)$ étant une fonction à valeur unitaire sur le kième intervalle Baud T, et nulle en dehors.

La présente invention a pour but des dispositifs de codage quadriphase simples et peu coûteux déduits d'une formulation particulière du signal résultant d'un codage quadriphase.

Elle a pour objet un dispositif de codage quadriphase comportant essentiellement:

— une base de temps délivrant deux signaux d'horloge rectangulaires symétriques à deux niveaux, à la fréquence Baud, qui sont en quadrature l'un avec l'autre et dont l'un est en phase avec les intervalles Baud,

— un multiplexeur à deux entrées et une sortie, qui reçoit les deux signaux d'horloge de la base de temps et qui est commandé par un signal binaire formé par la valeur prise par l'une des informations du groupe en cours de transmission,

— et un multiplicateur de signaux binaires recevant, d'une part, le signal de sortie du multiplexeur et, d'autre part, un signal binaire formé par la valeur prise par l'autre information du groupe en cours de transmission, et délivrant un signal de transmission en bande de base.

Elle a également pour objet une variante du dispositif de codage précédent dans lequel le multiplexeur est commandé par le produit des deux informations binaires de chaque groupe et non uniquement par l'une d'entre elles.

D'autres caractéristiques et avantages de l'invention ressortiront des revendications jointes et de la description ci-après de plusieurs modes de réalisation donnés à titre d'exemple. Cette description sera faite en regard du dessin dans lequel:

— la fig. 1 illustre les formes des éléments de signal composant le signal de transmission en bande de base,

— les fig. 2 et 3 représentent différents schémas de codeurs permettant d'obtenir le signal de transmission en bande de base à partir des données à transmettre,

— la fig. 4 représente un schéma de décodeur permettant de récupérer les données à partir de la réception du signal de transmission éventuellement placé en bande de base,

— et les fig. 5 et 6 représentent respectivement la partie émission et la partie réception d'un système complet de transmission synchrone de données utilisant les codeurs et le décodeur représentés aux figures précédentes.

Le signal z(t) résultant d'un codage quadriphase peut se mettre à un coefficient multiplicatif près sous la forme

$$z(t)=\sum_k \left[ (b_k+a_k) \text{ signe } \left(\cos\left(\frac{2\pi t}{T}\right)\right) + (b_k-a_k) \text{ signe } \left(\sin\left(\frac{2\pi t}{T}\right)\right) \right] d\,(t-kT) \quad (1)$$

$a_k$ et $b_k$ étant deux suites d'informations binaires de valeur $\pm 1$ de débit synchrone égal à $1/T$.

En effet, l'un des termes $b_k + a_k$ et $b_k - a_k$ étant nécessairement nul, le signal z(t) est composé d'une succession d'éléments occupant chacun un intervalle Baud et pouvant prendre quatre formes possibles correspondant à celles des quatre fonctions:

$$\pm \; \text{signe} \left( \sin \frac{2\,\pi t}{T} \right) \cdot d\;(t-kT)$$

$$\pm \; \text{signe} \left( \cos \frac{2\,\pi t}{T} \right) \cdot d\;(t-kT)$$

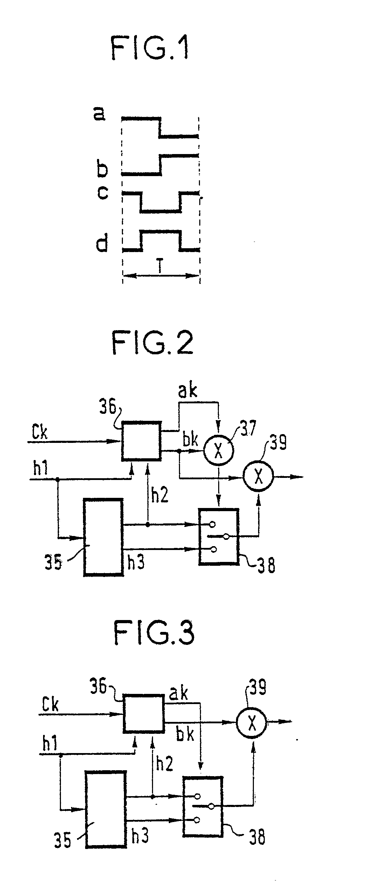

Ces formes sont représentées en a, b, c et d à la fig. 1. Elles occupent chacune un intervalle Baud et sont constituées d'une suite de quatre symboles bivalents consécutifs de même durée pouvant prendre chacun un premier et un deuxième niveau, cette suite de quatre symboles bivalents comportant nécessairement deux symboles bivalents de chaque niveau et au moins un ensemble de deux symboles bivalents consécutifs d'un même niveau.

Les quatre éléments de signal sont complémentaires deux à deux, leurs formes se déduisant par un simple changement de signe. Il en est de même pour les quatre valeurs possibles d'un groupe de deux informations binaires (1,1 étant complémentaire de $-1,-1$ et $1,-1$ de $-1,1$). L'expression (1) du signal $z(t)$ montre que des éléments de signal de forme complémentaire sont affectés à des valeurs complémentaires du groupe des deux informations binaires $a_k\,b_k$. Cette limitation n'en est pas une car elle peut être tournée en remplaçant l'une des informations binaires $a_k$ ou respectivement $b_k$ par son produit avec l'autre $b_k$ ou respectivement $a_k$. Elle conduit néanmoins à deux mises en œuvre distinctes qui aboutissent, comme on le verra ultérieurement, à deux types de codeurs et décodeurs.

En regroupant les informations binaires à transmettre par groupes de deux et en faisant correspondre à chaque groupe un élément de signal qui occupe un intervalle Baud particulier et qui prend au cours de cet intervalle Baud l'une des quatre formes représentées à la fig. 1, on obtient un système de transmission synchrone particulièrement performant avec un signal de transmission qui a un spectre de fréquence d'un encombrement égal à celui d'un système de transmission synchrone employant le code biphase L ou biphase modifié et ayant un débit d'informations moitié moindre.

La fig. 2 représente un codeur affectant les formes des éléments représentés à la fig. 1 aux quatre valeurs possibles d'un groupe de deux informations binaires en respectant les complémentarités. Ce codeur reçoit une suite d'informations binaires à transmettre $C_k$ se succédant à une cadence $2/T$ et un signal d'horloge $h_1$ rectangulaire symétrique à deux niveaux de fréquence $2/T$ cadençant cette suite. Il comporte:

— une base de temps 35 pilotée par le signal d'horloge $h_1$ et délivrant un signal d'horloge $h_2$ à la fréquence moitié, de forme rectangulaire symétrique à deux niveaux, définissant les intervalles Baud et une version en quadrature $h_3$ de ce signal d'horloge $h_2$,

— un convertisseur série-parallèle 36 recevant la suite des informations binaires $C_k$ à transmettre et délivrant sur deux sorties distinctes les informations $C_k$ réparties en deux sous-suites distinctes $a_k$ et $b_k$, de débit moitié $1/T$, synchrone avec le signal d'horloge $h_2$,

— un multiplicateur 37 intercalé entre les sorties du convertisseur série-parallèle 36 remplaçant la sous-suite des informations binaires $b_k$ par une autre sous-suite formée du produit des informations binaires $a_k$ et $b_k$,

— un multiplexeur 38 à deux entrées et une sortie recevant en entrée les signaux d'horloge $h_2$ et $h_3$, et commandé par le signal de sortie du multiplicateur 37,

— un multiplicateur 39 à deux entrées connectées à la sortie du multiplexeur 38 et à l'une des sorties du convertisseur série-parallèle 36, ledit multiplicateur 39 délivrant en sortie le signal de transmission en bande de base.

Les multiplicateurs 37 et 39 peuvent être réalisés à l'aide de portes logiques de type «ou exclusif».

Le fonctionnement de ce codeur est basé sur une nouvelle formulation du signal $z(t)$ de l'expression (1) qui peut en effet s'écrire:

$$z(t) = 2\sum_k b_k\,d\;(t-kT)\;\text{signe}\,\cos\left\{\frac{2\,\pi t}{T}+\right.$$

$$\left.\frac{\pi}{4}[a_k\,b_k\,d\;(t-kT)-1]\right\}$$

montrant que le signal de transmission en bande de base peut encore s'obtenir en modulant à l'aide d'un signal binaire

$$\sum_k b_k\,d\;(t-kT)$$

formé de la suite des informations binaires $b_k$, une des deux porteuses rectangulaires à deux niveaux

$$\text{signe}\,\left(\sin\left(\frac{2\,\pi}{T}\,t\right)\right);\;\text{signe}\,\left(\cos\left(\frac{2\,\pi}{T}\,t\right)\right)$$

choisie en fonction du signal binaire

$$\sum_k a_k\,b_k\,d\;(t-kT)$$

formé de la suite des produits des informations binaires $a_k$ et $b_k$.

Le multiplicateur 39 peut avoir son entrée connectée indifféremment à l'une des sorties du convertisseur série-parallèle 36.

La fig. 3 représente une variante du codeur de la fig. 2 permettant d'adopter une correspondance entre les formes d'éléments de signal et les valeurs d'un groupe de deux informations ne respectant pas les complémentarités. Cette variante présente les mêmes éléments que le codeur de la fig. 1 à l'exception du multiplicateur 37 qui est supprimé. En effet, on a vu précédemment que pour passer d'une correspondance respectant les complémentarités, c'est-à-dire affectant des formes d'élément de signal identique mais de signes contraires à deux valeurs complémentaires $+1,+1$ et $-1,-1$ ou $+1,-1$ et $-1,+1$ d'un groupe de deux informations binaires à une correspondance ne respectant pas les complémentarités, il suffisait de remplacer l'une des sous-suites d'informations binaires $a_k\,b_k$ par une sous-suite formée des produits des deux informations binaires. Si dans le cas du codeur de la fig. 2 on remplace la sous-suite des informations binaires $a_k$ par celle des produits $a_k\cdot b_k$ il apparaît en sortie du multiplicateur 37 des termes $a_k\cdot b_k\cdot b_k$ qui

sont égaux à $a_k$. Cela revient par conséquent à supprimer le multiplicateur 37 et conduit à un codeur d'une structure très simple. Bien évidemment les sorties du convertisseur série-parallèle 36 peuvent être échangées.

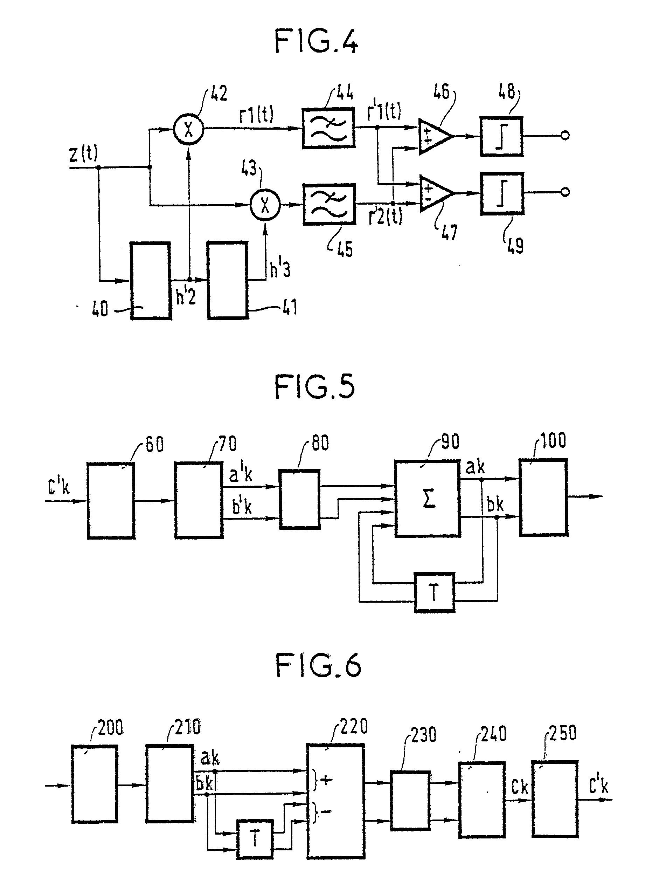

La fig. 4 représente le schéma d'un décodeur adapté à un codeur respectant les complémentarités dans l'affectation des formes d'élément de signal représentées à la fig. 1 aux valeurs possibles pour un groupe de deux informations binaires. Ce décodeur comporte:

— un récupérateur d'intervalles Baud 40 fournissant à partir du signal de transmission reçu éventuellement ramené en bande de base un signal d'horloge $h'_2$ rectangulaire symétrique à deux niveaux de période T synchrone avec le signal d'horloge d'émission $h_2$,

— une base de temps 41 fournissant à partir du signal d'horloge $h'_2$ une version en quadrature $h'_3$ de ce même signal,

— deux multiplicateurs 42, 43 recevant le signal de transmission éventuellement placé en bande de base $z(t)$ et l'un le signal d'horloge $h'_2$, l'autre le signal d'horloge $h'_3$,

— deux filtres passe-bas 44, 45 éliminant les fréquences résiduelles en 2/T présentes aux sorties des multiplicateurs 42, 43,

— un sommateur 46 à deux entrées connectées aux sorties des filtres passe-bas 44, 45,

— un soustracteur 47 à deux entrées connectées aux sorties des filtres passe-bas 44, 45,

— et deux circuits écrêteurs 48, 49 connectés l'un en sortie du sommateur 46, l'autre en sortie du soustracteur 47, délivrant l'un un signal binaire représentatif des valeurs de l'une des informations de chaque groupe, l'autre un signal binaire représentatif des valeurs de l'autre information de chaque groupe.

Le récupérateur d'intervalles Baud 40 peut être réalisé à l'aide d'un filtre centré à la fréquence 1/T et d'une horloge locale à fréquence nominale 1/T asservie en phase au signal de sortie du filtre grâce à une boucle d'asservissement à forte constante de temps.

La base de temps peut être un simple circuit à retard introduisant un délai T/4.

Les deux multiplicateurs 42, 43 traitant des signaux à deux niveaux peuvent être des portes logiques de type «ou exclusif».

Le multiplicateur 42 alimenté par le signal d'horloge $h'_2$ de la forme:

$$h'_2 = \text{signe} \left( \sin \left( \frac{2\pi}{T} t \right) \right)$$

et par le signal de transmission reçu éventuellement placé en bande de base $z(t)$ exprimé sous la forme de la relation (1) délivre un signal $r_1(t)$ à deux niveaux de la forme:

$$r_1(t) = \sum_k \left\{ (b_k + a_k) \ d \ (t - kT) \ \text{signe} \left( \sin \frac{4\pi}{T} t \right) + (b_k - a_k) \ d \ (t - kT) \right\}$$

Le filtre passe-bas 44 élimine le premier terme de la somme et délivre un signal à trois niveaux $r'_1(t)$

$$r'_1(t) = \sum_k (b_k - a_k) \ d \ (t - kT)$$

De la même manière, l'autre filtre passe-bas 45 délivre un signal à trois niveaux $r'_2(t)$

$$r'_2(t) = \alpha \sum_k (b_k + a_k) \ d \ (t - kT)$$

$\alpha$ étant un coefficient pouvant être égal à $\pm 1$ selon la correspondance adaptée au codage entre les éléments de signal de la fig. 1 et les valeurs possibles d'un groupe de deux informations binaires et le sens du déphasage de $\pi/2$ du signal d'horloge $h'_3$ par rapport à $h'_2$.

On retrouve donc, au signe près, en sortie des écrêteurs 48 et 49 les signaux binaires:

$$\sum_k b_k \ d \ (t - kT) \ ; \sum_k a_k \ d \ (t - kT)$$

formés l'un des valeurs de l'une des informations des groupes transmis successivement et l'autre de l'autre information de ces groupes.

Le décodeur de la fig. 4 peut être aisément adapté à un codeur ne respectant pas les complémentarités dans l'affectation des formes d'éléments de signal représentées à la fig. 1 aux valeurs possibles pour un groupe de deux informations binaires. Il suffit pour cela d'ajouter un multiplicateur en sortie de l'un des circuits écrêteurs 48 et 49. L'une des suites $a_k$ $b_k$ est délivrée par la sortie de l'écrêteur 48 ou de l'écrêteur 49 et l'autre par la sortie de ce dernier multiplicateur. En effet ce multiplicateur en effectuant la multiplication de l'une des suites d'information $a_k$ ou $b_k$ délivrée par la sortie de l'écrêteur 48 ou respectivement de l'écrêteur 49 et de la suite des produits des informations $a_k \cdot b_k$ délivrées alors par la sortie de l'écrêteur 49 ou respectivement de l'écrêteur 48 fournit la suite manquante des informations $b_k$ ou $a_k$.

Les deux suites d'informations $a_k$ et $b_k$ disponibles en sortie du décodeur sont éventuellement transformées en une seule suite d'informations $C_k$ de débit double par un convertisseur parallèle-série non représenté.

Un exemple de système de transmission synchrone de données utilisant les codeurs et décodeurs qui viennent d'être décrits est représenté pour la partie émission à la fig. 5 et pour la partie réception à la fig. 6.

La suite d'informations binaires à transmettre $C'_k$ de débit 2/T est tout d'abord soumise à un brouilleur 60 qui évite les raies particulières dans le spectre des données à transmettre puis appliquées à un convertisseur série-parallèle 70 qui la transforme en deux sous-suites synchrones $a'_k$ et $b'_k$ de débit moitié 1/T. Les deux sous-suites synchrones $a'_k$ et $b'_k$ sont appliquées à un codeur Gray 80 qui évite la multiplication des erreurs puis à un codeur différentiel 90 qui est réalisé avec un additionneur modulo quatre bouclé par l'intermédiaire d'une paire de registres introduisant un retard d'une période Baud et qui permet de s'affranchir des inversions de polarité notamment dans le cas d'utilisation de lignes de transmission en paires symétriques. Ce codeur différentiel 90 délivre les groupes d'infor-

mations $a_k$ $b_k$ transformés dans un circuit 100 constitué de l'un des codeurs précédemment décrits privé de son convertisseur série-parallèle, en un signal de transmission en bande de base à deux niveaux éventuellement transposé en bande passante par une modulation.

Le signal de transmission reçu est soumis à un récepteur de ligne 200 dans lequel il est filtré, éventuellement démodulé pour être remis en bande de base et égalisé, puis remis en forme par détection des passages à zéro. Il est ensuite appliqué à un décodeur 210 choisi parmi ceux décrits précédemment compatibles avec celui du circuit d'émission. Les deux suites d'informations $a_k$ $b_k$ qui en résultent sont appliquées à un décodeur différentiel formé d'un soustracteur numérique à deux digits 220 associé à une paire de registres introduisant un retard d'une période Baud, puis à un décodeur Gray 230, à un convertisseur parallèle-série 240 regroupant les deux suites parallèles d'informations de débit 1/T en une seule suite d'informations $C_k$ de débit 2/T. Cette dernière suite d'informations $C_k$ est ensuite appliquée à un débrouilleur 250 délivrant sous sa forme initiale la suite d'informations $C'_k$ appliquée à la partie émission du système.

## Revendications

1. Dispositif de codage quadriphase pour transmission synchrone de données adapté à la transmission un à un de groupes de deux informations binaires au cours d'intervalles de temps constants successifs dits intervalles Baud, caractérisé en ce qu'il comporte:
— une base de temps (35) délivrant deux signaux d'horloge ($h_2$, $h_3$) rectangulaires symétriques à deux niveaux, à la fréquence Baud, qui sont en quadrature l'un avec l'autre et dont l'un est en phase avec les intervalles Baud,
— un multiplexeur (38) à deux entrées et une sortie, qui reçoit les deux signaux d'horloge ($h_2$, $h_3$) de la base de temps (35) et qui est commandé par un signal binaire formé par la valeur prise par l'une des informations du groupe en cours de transmission,
— et un multiplicateur (39) de signaux binaires recevant d'une part le signal de sortie du multiplexeur (38) et d'autre part un signal binaire formé par la valeur prise par l'autre information du groupe en cours de transmission, et délivrant un signal de transmission en bande de base.

2. Dispositif de codage quadriphase pour transmission synchrone de données adapté à la transmission un à un de groupes de deux informations binaires au cours d'intervalles de temps constants successifs dits intervalles Baud, caractérisé en ce qu'il comporte:
— une base de temps (35) délivrant deux signaux d'horloge ($h_2$, $h_3$) rectangulaires symétriques à deux niveaux, à la fréquence Baud, qui sont en quadrature l'un avec l'autre et dont l'un est en phase avec les intervalles Baud,
— un premier multiplicateur (37) de signaux binaires à deux entrées recevant deux signaux binaires, l'un formé par la valeur prise par l'une ($b_k$) des informations du groupe en cours de transmission, l'autre par la valeur prise par l'autre ($a_k$) d'information du groupe en cours de transmission,
— un multiplexeur (38) à deux entrées et une sortie, qui reçoit les deux signaux d'horloge ($h_2$, $h_3$) de la base de temps (35) et qui est commandé par le signal de sortie du premier multiplicateur (37),
— et un deuxième multiplicateur de signaux binaires (39) recevant d'une part le signal de sortie du multiplexeur (38) et d'autre part l'un des signaux binaires formés par la valeur prise par l'une ($b_k$) des informations du groupe en cours de transmission, et délivrant un signal de transmission en bande de base.

## Patentansprüche

1. Vierphasenkodierungsvorrichtung für die synchrone Datenübertragung, die der Übertragung von Gruppen von je zwei Binärinformationen während aufeinanderfolgender konstanter Zeitintervalle, Baud-Intervalle genannt, angepasst ist, dadurch gekennzeichnet, dass sie aufweist:
— eine Zeitbasis (35), die zwei rechteckförmige symmetrische Taktsignale ($h_2$, $h_3$) mit zwei Pegeln mit der Baud-Frequenz liefert, die miteinander in Quadratur liegen und von denen eines mit den Baud-Intervallen in Phase ist,
— einen Multiplexer (38) mit zwei Eingängen und einem Ausgang, der die beiden Taktsignale ($h_2$, $h_3$) der Zeitbasis (35) empfängt und der von einem Binärsignal gesteuert wird, das von dem von einer der Informationen der gerade übertragenen Gruppe genommenen Wert gebildet wird,
— und einen Binärsignal-Multiplizierer (39), der einerseits das Ausgangssignal des Multiplexers (38) und andererseits ein von dem von der anderen Information der gerade übertragenen Gruppe genommenen Wert gebildetes Binärsignal empfängt, und der ein Übertragungssignal im Basisband liefert.

2. Vierphasenkodierungsvorrichtung für die synchrone Datenübertragung, die der Übertragung von Gruppen von je zwei Binärinformationen während aufeinanderfolgender konstanter Zeitintervalle, Baud-Intervalle genannt, angepasst ist, dadurch gekennzeichnet, dass sie aufweist:
— eine Zeitbasis (35), die zwei rechteckförmige symmetrische Taktsignale ($h_2$, $h_3$) mit zwei Pegeln mit der Baud-Frequenz liefert, die miteinander in Quadratur liegen und von denen eines mit den Baud-Intervallen in Phase ist,
— einen ersten Binärsignal-Multiplizierer (37) mit zwei Eingängen, die zwei Binärsignale empfangen, von denen eines von dem von einer der Informationen ($b_k$) der gerade übertragenen Gruppe genommenen Wert gebildet wird und das andere von dem von der anderen Information ($a_k$) der gerade übertragenen Gruppe genommenen Wert gebildet wird,
— einen Multiplexer (38) mit zwei Eingängen und einem Ausgang, der die beiden Taktsignale ($h_2$, $h_3$) der Zeitbasis (35) empfängt und der vom Ausgangssignal des ersten Multiplizierers (37) gesteuert wird,

— und einen zweiten Binärsignal-Multiplizierer (39), der einerseits das Ausgangssignal des Multiplexers (38) und andererseits eines der von dem von einer der Informationen ($b_k$) der gerade übertragenen Gruppe genommenen Wert gebildeten Binärsignale empfängt und ein Übertragungssignal im Basisband liefert.

## Claims

1. A four phase coding device for synchroneous data transmission adapted to the transmission of groups of two binary informations during successive constant time intervals called Baud intervals, characterized in that it comprises:

— a time base (35) delivering two two-level symmetrical rectangular clock signals ($h_2$, $h_3$) at the Baud frequency, which are in quadrature with each other, and one of which is in phase with the Baud intervals,

— a multiplexer (38) with two inputs and one output, which receives the two clock signals ($h_2$, $h_3$) from the time base (35) and which is controlled by a binary signal formed by the value taken by one of the informations of the group to be transmitted,

— and a binary signal multiplier (39) receiving on the one hand the output signal of the multiplexer (38) and on the other hand a binary signal formed by the value taken by the other information of the group to be transmitted, and delivering a base band transmission signal.

2. A four phase coding device for synchroneous data transmission adapted to the transmission of groups of two binary informations during successive constant time intervals called Baud intervals, characterized in that it comprises:

— a time base (35) delivering two two-level symmetrical rectangular clock signals ($h_2$, $h_3$) at the Baud frequency, which are in quadrature with each other and one of which is in phase with the Baud intervals,

— a first binary signal multiplier (37) with two inputs receiving two binary signals, one formed by the value taken by one of the informations ($b_k$) of the group to be transmitted, the other by the value taken by the other information ($a_k$) of the group to be transmitted,

— a multiplexer (38) with two inputs and one output, which receives the two clock signals ($h_2$, $h_3$) of the time base (35) and which is controlled by the output signal of the first multiplier (37),

— and a second binary signal multiplier (39) receiving on the one hand the output signal of the multiplexer (38) and on the other hand one of the binary signals formed by the value taken by one of the informations ($b_k$) of the group to be transmitted and delivering a base band transmission signal.

# FIG.1

# FIG.2

# FIG.3

# FIG.4

# FIG.5

# FIG.6